# FASCICULE DE BREVET EUROPEEN

(11) **EP 0 606 792 B1**
(45) Date de publication et mention de la délivrance du brevet: **12.09.2001**
(21) Numéro de dépôt: 93402996.8
(22) Date de dépôt: 13.12.1993
(51) Int. Cl.: G06F 1/00

(54) **Procédé d'authentification d'un ensemble informatique par un autre ensemble informatique**
Verfahren zur Beurkundung einer Informationseinheit durch eine andere
Procedure for authentication of an information unit by another

(30) Priorité: 15.12.1992 FR 9215099
(43) Date de publication de la demande: 20.07.1994
(73) Titulaire: FRANCE TELECOM, 75015 Paris (FR)
(72) Inventeur: Campana, Mireille, F-92140 Clamart (FR); Allegre, François, F-94270 Le Kremlin Bicetre (FR); Arditti, David, F-92140 Clamart (FR); Millot, Jean, F-92130 Issy Les Moulineaux (FR)
(74) Mandataire: Dubois-Chabert, Guy

(56) Documents cités:
- WO-A-87/03977
- WO-A-91/14980

## Description

### Domaine technique

L'invention concerne un procédé pour authentifier un terminal informatique muni d'une mémoire programmable par un serveur informatique.

Ce procédé peut être appliqué à tous types de terminal informatique pouvant être modifié par adjonction d'une mémoire PROM, EPROM (en termes anglosaxons, "Programmable Read Only Memory") ou chargement en mémoire RAM ("Random Access Memory") ou EEPROM ("Electronicaly Erasable Programmable Read Only Memory") afin de mémoriser des données et des programmes. Ce procédé peut, en particulier, être appliqué à un Minitel® portable.

### Etat de la technique

Dans les systèmes informatiques actuels, la protection des données joue un rôle de plus en plus important. En effet, la qualité du système informatique dépend de manière décisive de la sécurité de l'échange de données à l'intérieur du système. On cherche de plus en plus à sécuriser l'accès au système, c'est-à-dire que l'on cherche à contrôler si les personnes utilisant le système sont autorisées à l'utiliser, les personnes non-autorisées devant alors être refusées par ledit système.

Un mode de réalisation simple, mais n'offrant pas une sécurité absolue, consiste à contrôler l'accès au système informatique par la vérification d'un mot de passe connu uniquement de l'utilisateur autorisé et souvent changé afin de limiter la possibilité que des utilisateurs non-autorisés découvrent ce mot de passe. Cependant, il y a de forts risques que les mots de passe soient trouvés ou interceptés par des personnes non-autorisées désireuses d'utiliser le système informatique. De plus, les mots de passe choisis par les utilisateurs sont souvent faciles à trouver par recherche exhaustive. Cependant, ce sont eux qui, la plupart du temps, sont utilisés car les mots de passe aléatoires générés par les systèmes informatiques sont bien souvent plus difficile à retenir. La recherche exhaustive en utilisant un dictionnaire de mots de passe est souvent possible sans tentative de connexion, pour peu que l'on sache lire le fichier des mots de passe cryptés.

Une autre possibilité de sécuriser un traitement informatique consiste à coder/décoder les informations transmises entre les systèmes. Ce procédé de codage/décodage est de plus en plus fréquent. Il utilise généralement des dispositifs annexes généralement connectés aux terminaux. Ces dispositifs sont du type calculettes, jetons, cartes à puce, ou encore, authentifieurs vidéotex.

Les dispositifs de codage/décodage les plus fréquents utilisent des cartes à puce. Ils nécessitent donc une pluralité de lecteurs de cartes, chaque lecteur étant connecté sur l'un des terminaux du système informatique.

Un tel système informatique a donc pour principal inconvénient d'être coûteux car il nécessite la connexion d'un lecteur par terminal. De plus, ce système de cartes à mémoire n'est utilisable qu'à partir de certains terminaux. Un système de ce type, utilisant des cartes à puce pour sa sécurisation, est décrit dans le brevet européen publié sous le numéro EP-0 400 441.

En outre, un procédé de sécurisation des échanges entre un terminal vidéotex et un serveur est décrit, dans le brevet européen publié sous le numéro EP-A1-0 317 400. Ce procédé a notamment pour inconvénient de nécessiter l'utilisation d'un boîtier additionnel enfiché sur la prise péri-informatique du terminal vidéotex.

Document WO 91/14980 introduit un procédé d'authentification dans lequel le mot de passe fourni par l'utilisateur au terminal, est chiffré avant sa transmission et son écriture dans la mémoire. Le procédé utilise une combinaison du mot de passe avec un nombre aléatoire.

### Exposé de l'invention

L'invention a pour but de remédier aux inconvénients des procédés décrits ci-dessus. Elle permet l'authentification par signature d'aléa d'un terminal de système informatique et, plus particulièrement, d'un terminal vidéotex portable, connu sous le nom commercial de Minitel ® portable. Elle permet, en effet, de réaliser une authentification d'un Minitel ® portable sans utiliser aucun matériel supplémentaire devant être connecté au Minitel ® et dont la consommation électrique est généralement trop importante pour pouvoir être utilisé de façon optimale.

A cette fin, l'invention a pour objet un procédé d'authentification d'un premier ensemble informatisé par un second ensemble informatisé dans lequel :
- le premier ensemble envoie au second ensemble un code d'identité ;
- le second ensemble vérifie cette identité et, en cas d'accord, envoie au premier ensemble un nombre aléatoire ;
- le premier ensemble code le nombre aléatoire à l'aide d'un algorithme de signature défini par une clé secrète et envoie ce premier nombre aléatoire signé au second ensemble ;
- le second ensemble applique un algorithme de vérification de signature.

Ce procédé se caractérise par le fait que le premier ensemble informatisé est un terminal informatique muni d'une mémoire apte à être programmée et à enregistrer des données et dans laquelle sont écrits le code d'identité et une clé chiffrée, la clé secrète utilisée pour la signature du nombre aléatoire étant déterminée à l'aide d'un algorithme de déchiffrement utilisant la clé chiffrée et un mot de passe fourni par l'utilisateur au terminal.

Avantageusement, l'algorithme de vérification consiste en :
- une transformation, par un traitement de conversion, du code d'identité en la clé secrète ;
- une signature du nombre aléatoire par un algorithme de signature défini par la clé secrète pour fournir un second nombre aléatoire signé, dit signature de référence ;
- une comparaison de la signature de référence avec le premier nombre aléatoire signé provenant du terminal.

Selon le mode de réalisation de l'invention, la clé chiffrée est déterminée par chiffrement de la clé secrète par un algorithme de chiffrement utilisant un mot de passe.

Dans le cas d'un changement du mot de passe en un nouveau mot de passe, le procédé consiste à chiffrer la clé secrète au moyen d'un algorithme de chiffrement et du nouveau mot de passe pour fournir une nouvelle clé chiffrée.

Le procédé selon l'invention permet donc de rendre des services identiques à ceux d'un procédé utilisant la carte à puce, tout en ne nécessitant pas de lecteurs de cartes. L'ensemble informatique utilisé pour mettre en oeuvre ce procédé comporte un terminal informatique relié à un serveur. Le terminal informatique comporte une mémoire apte à stocker des programmes et des données. Cette mémoire peut être- une RAM (Random Access Memory), une EEPROM (Electronically Erasable Programable Read Only Memory), ou même une EPROM ou une PROM (Programable Read Only Memory).

Un tel terminal informatique, contrairement à la carte à puce, n'a pas de zone secrète dans laquelle peut être mémorisée une clé secrète. Aussi, la clé secrète est donc chiffrée avant d'être mémorisée dans la mémoire programmable équipant le terminal informatique. Le chiffrement de cette clé secrète est réalisé à partir d'un algorithme de chiffrement mis en oeuvre à l'aide d'un mot de passe connu de l'utilisateur. Ce mot de passe ne transite pas par les moyens de communication (ligne de transmission, par exemple) reliant le terminal au serveur du système informatique. De plus, ce mot de passe n'est pas écrit dans la mémoire du terminal. Il ne peut pas non plus être retrouvé par des essais exhaustifs effectués par une personne ayant eu accès au contenu de la mémoire.

Dans la description qui va suivre, le procédé selon l'invention sera décrit dans son application au Minitel ® portable, ce Minitel® étant muni d'une mémoire. On utilisera, cependant, indifféremment les termes Minitel ® et terminal.

### Brève description des dessins

- La figure 1 représente le schéma fonctionnel de personnalisation de la PROM, c'est-à-dire de la détermination de la clé secrète et de la clé secrète chiffrée ; détermination de la clé secrète et de la clé secrète chiffrée ;
- la figure 2 représente le schéma fonctionnel du procédé d'authentification selon l'invention ;
- la figure 3 représente le schéma fonctionnel du procédé selon l'invention dans le cas d'un changement de mot de passe.

### Exposé détaillé d'un mode de réalisation de l'invention

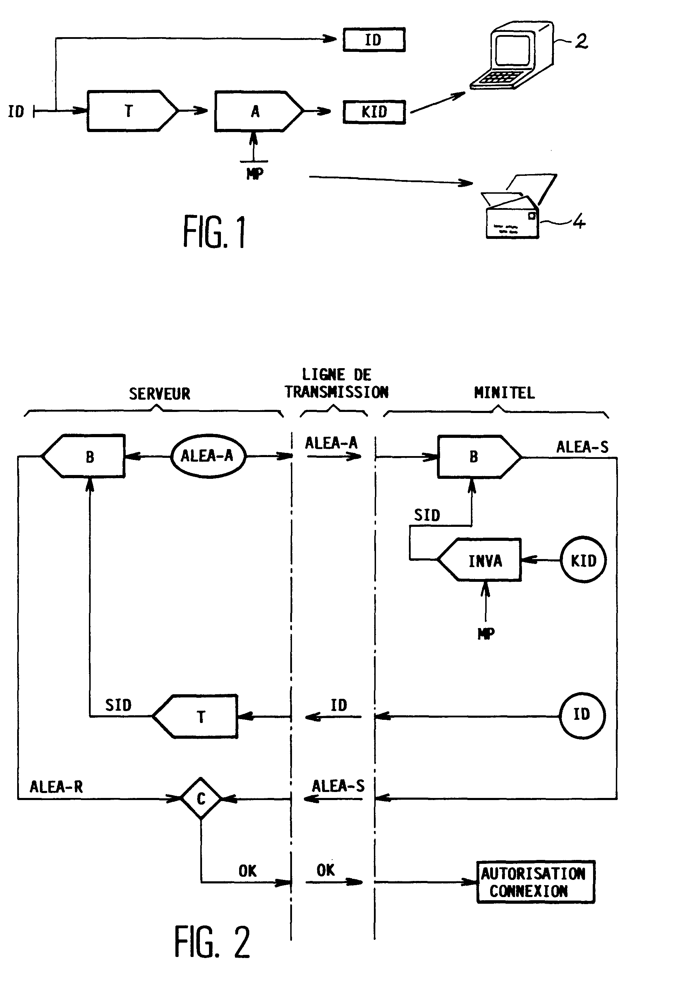

Sur la figure 1, on a représenté le schéma fonctionnel de l'opération de détermination de la clé secrète SID, ainsi que de la clé secrète chiffrée KID.

La clé secrète SID est recalculable par le serveur grâce au procédé T. Dans la mémoire du terminal 2, est mémorisée la clé secrète sous sa forme chiffrée KID.

Comme représenté sur la figure 1, la clé secrète SID est déterminée à partir du code d'identité ID. Ce code d'identité est un code non secret, représentatif de l'utilisateur demandant l'accès au système informatique. Pratiquement, ce code d'identité peut être le nom de l'utilisateur.

La détermination de cette clé secrète peut être effectuée à partir de plusieurs sortes de traitements. Selon une première variante de l'invention, cette clé secrète SID est déterminée à l'aide d'une base de données dans laquelle chaque code d'identité ID est converti en une clé secrète SID.

Selon une seconde variante, la clé secrète SID est déterminée à l'aide d'une fonction de diversification ayant pour variables le code d'identité ID et une clé mère mémorisée dans le serveur.

La phase de personnalisation du terminal informatique se déroule dans un ensemble appelé atelier de personnalisation. Un administrateur saisit le code d'identité ID de l'utilisateur sur le clavier de l'atelier de personnalisation. Ce code d'identité ID est alors écrit dans la mémoire du terminal 2.

L'atelier de personnalisation possède le même moyen de traitement que ce serveur. Il est donc en mesure de déterminer la clé secrète SID à partir de l'identité ID.

Lorsque la clé secrète SID a été déterminée, l'atelier de personnalisation met en oeuvre un algorithme A de chiffrement utilisant un mot de passe MP choisi, par défaut, par l'administrateur et entré dans l'atelier de personnalisation par saisie sur son clavier.

Selon une variante, le mot de passe MP est transmis à l'utilisateur par un canal sûr, référencé 4, ce canal pouvant être, par exemple, une enveloppe secrète.

Selon une autre variante, le mot de passe choisi pour déterminer la clé secrète SID est un mot de passe fictif qui, lorsque les clés SID et KID auront été déterminées, sera changé par le mot de passe propre à l'utilisateur.

Il résulte, de cet algorithme A de chiffrement, la détermination de la clé secrète chiffrée KID. Cette clé KID est mémorisée dans la mémoire du terminal 2.

Selon un mode de réalisation préféré de l'invention, lorsque l'opération de personnalisation de la mémoire décrite ci-dessus est réalisée, on effectue une opération de vérification des clés KID et SID par signatures d'un nombre aléatoire égal à zéro et nommé ALEA-0. Ces signatures sont réalisées, d'une part, dans le terminal et, d'autre part, dans l'atelier de personnalisation à l'aide duquel l'administrateur a déterminé lesdites clés KID et SID. Ces ALEA-0 sont signés, d'une part, par l'atelier de personnalisation et, d'autre part, par le terminal (comme décrit dans la suite du texte). Ils sont ensuite comparés l'un à l'autre : lorsqu'ils sont équivalents, on considère que l'opération de personnalisation est terminée et que la procédure d'authentification est alors possible.

La figure 2 montre les différentes opérations du procédé d'authentification selon l'invention.

Cette demande de connexion consiste à envoyer le code d'identité ID du terminal vers le serveur qui, après vérification de ce code d'identité, génère un nombre aléatoire, nommé ALEA-A, et transmet ce nombre aléatoire ALEA-A au terminal.

A la réception de ce nombre aléatoire ALEA-A, le terminal exécute un algorithme B de signature consistant à signer le nombre aléatoire ALEA-A à l'aide de la clé secrète SID sous sa forme chiffrée KID. En effet, comme cela a été expliqué précédemment, la clé secrète est mémorisée dans la mémoire sous sa forme chiffrée KID. Cette clé secrète chiffrée KID est donc déchiffrée, dans le terminal, par un algorithme de déchiffrement INVA. Cet algorithme de déchiffrement INVA est l'algorithme inverse de l'algorithme A de chiffrement. Il a pour paramètre le mot de passe MP de l'utilisateur. En sortie de cet algorithme INVA, on obtient donc la clé secrète SID utilisée conjointement à l'algorithme B de signature pour signer le nombre aléatoire ALEA-A. Ce nombre aléatoire signé est nommé ALEA-S.

Ce nombre aléatoire signé ALEA-S est transmis alors au serveur. Ce dernier vérifie la signature du nombre aléatoire ALEA-A par un test de comparaison du nombre aléatoire signé ALEA-S avec un résultat (ou signature de référence ALEA-R) qu'il a déterminé lui-même. En effet, lorsque le serveur a généré le nombre aléatoire ALEA-A lorsque le serveur a généré le nombre aléatoire ALEA-A qu'il a transmis au terminal, il effectue une opération de signature du nombre aléatoire ALEA-A considérée comme signature de référence ALEA-R. Cette opération de signature de référence est effectuée au moyen de l'algorithme B de signature et de la clé secrète SID recalculée grâce au procédé T par le serveur lui-même.

Un algorithme C de comparaison permet alors de vérifier si le nombre aléatoire signé ALEA-S et la signature de référence sont équivalents. Si cette équivalence est vérifiée, le serveur envoie au terminal un message d'accord de connexion. Ce message est référencé OK et signifie à l'utilisateur qu'il a l'autorisation de se connecter au serveur.

Si l'équivalence entre le nombre aléatoire ALEA-S et la signature de référence ALEA-R n'est pas vérifiée, le message OK n'est pas envoyé et l'utilisateur n'est pas autorisé à se connecter au serveur.

Les algorithmes A de chiffrement et B de signature, utilisés dans le procédé décrit ci-dessus, ne sont pas plus précisément décrits dans ce texte car ils sont de type tout à fait connu de l'homme de l'art.

Pour l'utilisateur, l'authentification selon le procédé de l'invention se fait de façon quasi-transparente. En effet, l'utilisateur, lors de la demande de connexion de son terminal au serveur, reçoit sur son terminal un nombre aléatoire de la part dudit serveur. Le programme utilisateur contenu dans la mémoire lui demande alors de rentrer son mot de passe MP. Ce programme utilisateur déchiffre la clé secrète chiffrée KID et signe le nombre aléatoire ALEA-A envoyé par le serveur. Cette signature est ensuite envoyée au serveur, sans que l'utilisateur n'intervienne à nouveau.

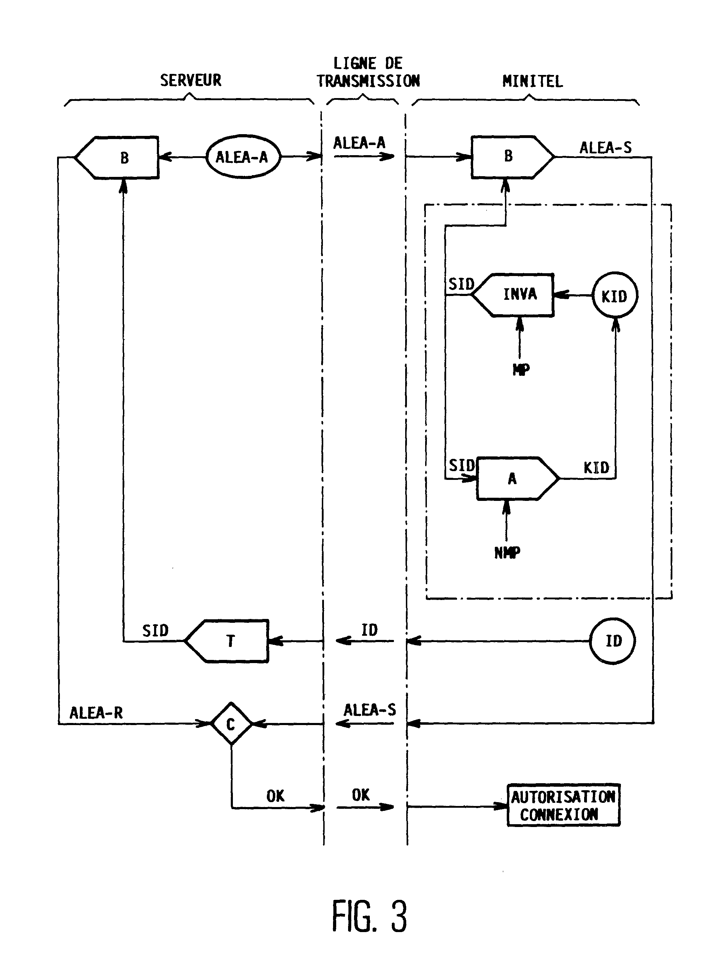

Sur la figure 3, on a représenté le schéma fonctionnel du procédé selon l'invention, dans le cas particulier d'un changement du mot de passe MP.

En effet, le procédé de l'invention a pour avantage, notamment, de permettre un changement de mot de passe (représenté par le bloc en traits mixtes sur la figure 3) sans risque, car ce changement est réalisé après une connexion réussie, ce qui assure la validité de la clé secrète SID. De façon plus précise, lorsque la connexion entre le terminal et le serveur a été établie, la clé secrète chiffrée KID est déchiffrée à partir de l'algorithme INVA de déchiffrement et à partir du premier mot de passe MP (c'est-à-dire du mot de passe que l'on cherche à modifier). On a ainsi retrouvé la clé secrète SID qui est utilisée par l'algorithme de chiffrement A avec le second mot de passe NMP (c'est-à-dire le nouveau mot de passe) pour créer une nouvelle forme chiffrée de la clé secrète. Cette nouvelle forme chiffrée sera écrite dans la mémoire à la place de l'ancienne forme chiffrée de la clé secrète KID.

Ce procédé assure donc la sécurité du mot de passe qui reste en "local", c'est-à-dire qu'il ne sera à aucun moment envoyé sur les moyens de transmission reliant le terminal et le serveur, moyens sur lesquels une écoute peut être possible.

On comprend, d'après cette description, qu'une éventuelle écoute sur les moyens de transmission entre le terminal et le serveur ne permet de déterminer ni le mot de passe ni les différentes clés car les informations circulant sur lesdits moyens de transmission ne permettent pas de recalculer, par des algorithmes inverses, ou tout autre moyen, ces clés et mot de passe.

On remarquera, en outre, que le système d'authentification par cartes à puce, tel que connu, et le système d'authentification à partir d'un terminal muni d'une PROM peuvent être compatibles dans le cas où la PROM et la carte à puce comportent le même algorithme.

## Revendications

1. Procédé d'authentification d'un premier ensemble informatique par un second ensemble informatique selon lequel :
- le premier ensemble envoie au second ensemble un code d'identité (ID) ;
- le second ensemble vérifie cette identité et, en cas d'accord, envoie au premier ensemble un nombre aléatoire (ALEA-A) ;
- le premier ensemble code le nombre aléatoire à l'aide d'un algorithme de signature (B) utilisant une clé secrète (SID) et envoie ce premier nombre aléatoire signé (ALEA-S) au second ensemble ;
- le second ensemble applique un algorithme de vérification de signature (T, B, C) ;
**caractérisé en ce que**, le premier ensemble informatique étant un terminal informatique muni d'une mémoire apte à être programmée et à enregistrer des données, le code d'identité et une clé secrète chiffrée (KID) sont écrits dans la mémoire et, la clé secrète utilisée pour la signature du nombre aléatoire est déterminée à l'aide d'un algorithme de déchiffrement (INVA) utilisant la clé secrète chiffrée (KID) et un mot de passe (MP) fourni par l'utilisateur au terminal.

2. Procédé d'authentification selon la revendication 1, **caractérisé en ce que** l'algorithme de vérification consiste en :
- une transformation, par un traitement (T) de conversion, du code d'identité en la clé secrète ;
- une signature du nombre aléatoire par un algorithme de signature (B) défini par la clé secrète pour fournir un second nombre aléatoire signé, dit signature de référence (ALEA-R) ;
- une comparaison de la signature de référence avec le premier nombre aléatoire signé provenant du terminal.

3. Procédé d'authentification selon l'une quelconque des revendications 1 et 2, **caractérisé en ce que** la clé chiffrée est déterminée par chiffrement de la clé secrète par un algorithme de chiffrement (A) utilisant un mot de passe choisi par défaut.

4. Procédé d'authentification selon l'une quelconque des revendications 1 à 3, **caractérisé en ce qu'**il consiste, dans le cas d'un changement du mot de passe en un nouveau mot de passe (NMP), à chiffrer la clé secrète au moyen d'un algorithme de chiffrement (A) et du nouveau mot de passe pour fournir une nouvelle clé chiffrée.

## Claims

1. Process for the authentification of a first data processing system by a second data processing system according to which the first system supplies the second system with an identity code (ID), the second system checks this identity and, in the case of agreement, supplies a random number (ALEA-A) to the first system, the first system encodes the random number with the aid of a signature algorithm (B) using a secret key (SID) and supplies said first signed random number (ALEA-S) to the second system, which applies a signature checking algorithm (T, B, C), **characterized in that** the first data processing system is a data processing terminal equipped with a memory which can be programmed and can record said data, the identity code and an encrypted secret key (KID) are entered in the memory and the secret key used for the signature of the random number is determined with the aid of a decrypting algorithm (INVA) using the encrypting secret key (KID) and a password (MP) supplied by the user to the terminal.

2. Authentification process according to claim 1, **characterized in that** the checking algorithm consists of a transformation, by a conversion treatment (T), of the identity code into the secret key, a signature of the random number by a signature algorithm (B) defined by the secret key in order to supply a second signed random number, called the reference signature (ALEA-R) and a comparison of the reference signature with the first signed random number from the terminal.

3. Authentification process according to either of the claims 1 and 2, **characterized in that** the encrypted key is determined by encrypting the secret key by an encrypting algorithm (A) using a password chosen by default.

4. Authentification process according to any one of the claims 1 to 3, **characterized in that**, in the case of a change of the password to a new password (NMP), it consists of encrypting the secret key by means of an encrypting algorithm (A) and the new password in order to supply a new encrypting key.

## Patentansprüche

1. Verfahren zur Authentifizierung einer ersten Informations- bzw. DV-Einheit durch eine zweite Informations-bzw. DV-Einheit, gemäß dem:
- die erste Einheit der zweiten Einheit einen Identitätscode (ID) sendet,
- die zweite Einheit diese Identität überprüft und im Falle der Übereinstimmung der ersten Einheit eine Zufallszahl (ALEA-A) sendet,
- die erste Einheit die Zufallszahl mittels eines Signaturalgorithmus (B) unter Verwendung eines geheimen Schlüssels (SID) codiert und diese signierte erste Zufallszahl (ALEA-S) der zweiten Einheit sendet,
- die zweite Einheit einen Signatur-Überprüfungsalgorithmus (T,B,C) anwendet,
**dadurch gekennzeichnet, daß** die erste Informations- bzw. DV-Einheit ein DV-Endgerät ist, das mit einem Speicher versehen ist, der programmierbar ist und in dem Daten aufgezeichnet werden können, und der Identitätscode und ein chiffrierter Geheimschlüssel (KID) in dem Speicher abgespeichert sind und der für die Signatur der Zufallszahl verwendete Geheimschlüssel mittels eines Dechiffrieralgorithmus (INVA) unter Verwendung des chiffrierten Geheimschlüssels (KID) und eines von dem Benutzer an das Endgerät gelieferten Paßworts (MP) bestimmt wird.

2. Authentifizierungsverfahren gemäß Anspruch 1, **dadurch gekennzeichnet, daß** der Überprüfungsalgorithmus besteht aus:
- einer Umwandlung des Identitätscodes in den Geheimschlüssel durch ein Konversionsverfahren (T),
- einer Signatur der Zufallszahl durch einen durch den Geheimschlüssel definierten Signaturalgorithmus (B), um eine zweite signierte Zufallszahl, eine sogenannte Referenzsignatur (ALEA-R), bereitzustellen,
- einem Vergleich der Referenzsignatur mit der vom Endgerät kommenden ersten signierten Zufallszahl.

3. Authentifizierungsverfahren gemäß einem der Ansprüche 1 und 2, **dadurch gekennzeichnet, daß** der chiffrierte Schlüssel durch Chiffrieren des Geheimschlüssels mittels eines Chiffrieralgorithmus (A) unter Verwendung eines ersatzweise (par défaut) gewählten Paßworts bestimmt wird.

4. Authentifizierungsverfahren gemäß einem der Ansprüche 1 bis 3, **dadurch gekennzeichnet, daß** es im Falle des Wechsels des Paßworts zu einem neuen Paßwort (NMP) darin besteht, den Geheimschlüssel mittels eines Chiffrieralgorithmus (A) und des neuen Paßworts zu chiffrieren, um einen neuen chiffrierten Schlüssel zu liefern.
